# FASCICULE DE BREVET EUROPEEN

(11) **EP 0 456 542 B1**
(45) Date de publication et mention de la délivrance du brevet: **22.12.1993**
(21) Numéro de dépôt: 91401086.3
(22) Date de dépôt: 24.04.1991
(51) Int. Cl.: B64C 25/50

(54) **Dispositif d'orientation d'un atterrisseur**
Radlenkungsvorrichtung
Steering wheel device

(30) Priorité: 02.05.1990 FR 9005533
(43) Date de publication de la demande: 13.11.1991
(73) Titulaire: MESSIER BUGATTI, F-78140 Velizy Villacoublay (FR)
(72) Inventeur: Derrien, Michel, F-78000 Versailles (FR); Brisedou, Philippe, F-94260 Fresnes (FR); Engerand, Jean-Luc, F-92330 Sceaux (FR)
(74) Mandataire: Fruchard, Guy

(56) Documents cités:
- FR-A- 1 155 664

## Description

La présente invention concerne un dispositif d'orientation d'un atterrisseur.

On sait que pour diriger un avion lors du roulage au sol il est nécessaire de prévoir des atterrisseurs orientables, généralement les atterrisseurs auxiliaires. Un atterrisseur orientable comporte un caisson destiné à être fixé à l'avion, généralement de façon rétractable, un tube tournant monté pour tourner par rapport au caisson autour d'un axe de rotation de tube tournant, et une tige coulissante montée pour coulisser dans le tube tournant selon une direction axiale de celui-ci et reliée à celui-ci par un compas, la tige coulissante supportant à sa partie inférieure les roues de l'atterrisseur. Pour orienter les roues de l'attérrisseur on connaît des dispositifs d'orientation comportant deux vérins fixés au caisson pour pivoter autour d'axes parallèles à l'axe de rotation du tube tournant et ayant chacun une extrémité associée de façon articulée à un organe d'orientation porté par le tube tournant. Dans ces dispositifs connus les vérins sont des vérins à double effet qui combinent leurs actions pour augmenter au maximum le secteur actif du dispositif d'orientation, c'est-à-dire le secteur angulaire dans lequel les roues de l'atterrisseur peuvent être orientées au moyen du dispositif d'orientation. Toutefois, pour combiner les efforts des deux vérins il est nécessaire de prévoir des distributeurs d'alimentation très sophistiqués pour alimenter chaque vérin dans le sens de l'extension ou de la rétraction en fonction de l'orientation de l'atterrisseur. Des distributeurs très sophistiqués sont onéreux et lourds. De plus, dans certaines parties du secteur actif, les vérins sont amenés à travailler dans des conditions de couple très défavorables.

Un but de la présente invention est de proposer un dispositif d'orientation d'un atterrisseur ayant une structure très simple, donc peu onéreuse et relativement légère, et pouvant fonctionner sur une plage angulaire importante.

En vue de la réalisation de ce but, on prévoit selon l'invention un dispositif d'orientation d'un atterrisseur comportant un caisson, un tube tournant monté dans le caisson pour tourner autour d'un axe de rotation de tube tournant,et une tige coulissante montée pour coulisser dans le tube tournant et reliée à celui-ci par un compas, le dispositif d'orientation comportant deux vérins fixés au caisson pour pivoter autour d'axes parallèles à l'axe de rotation de tube tournant dans lequel chaque vérin a une extrémité engagée de façon coulissante dans une lumière d'un organe d'orientation porté par le tube tournant, les vérins sont des vérins à simple effet agissant en poussée sur une extrémité des lumières de l'organe d'orientation pour faire pivoter l'atterrisseur dans un secteur actif délimité par des orientations de l'atterisseur pour une position étendue d'un vérin et une position rétractée de l'autre vérin, et le dispositif d'orientation comporte en outre des moyens pour assurer un verrouillage à l'extrémité de la lumière d'une extrémité du vérin en position rétractée lorsque l'atterrisseur passe par une limite du secteur actif, et maintenir le verrouillage tant que l'atterrisseur a une orientation correspondante à cette limite du secteur actif ou en dehors de celui-ci.

Ainsi, lorsque l'atterrisseur a une orientation correspondante à la limite du secteur actif, il est possible de faire pivoter l'atterrisseur de façon manuelle au delà de cette limite tout en maintenant l'extrémité du vérin solidaire de l'extrémité de la lumière de sorte que le vérin peut être réutilisé dès que l'atterrisseur est ramené dans une orientation comprise dans le secteur actif.

Selon un mode de réalisation avantageux de l'invention, les moyens pour assurer un verrouillage comprennent une came montée à l'extrémité du vérin engagée dans la lumière de l'organe d'orientation, et un galet suiveur de came fixé à l'organe d'orientation. Ainsi, le verrouillage se fait automatiquement dès que l'atterrisseur passe par une limite du secteur actif.

D'autres caractéristiques et avantages de l'invention apparaîtront à la lecture de la description qui suit d'un mode de réalisation particulier non limitatif de l'invention en liaison avec les figures ci-jointes, parmi lesquelles :

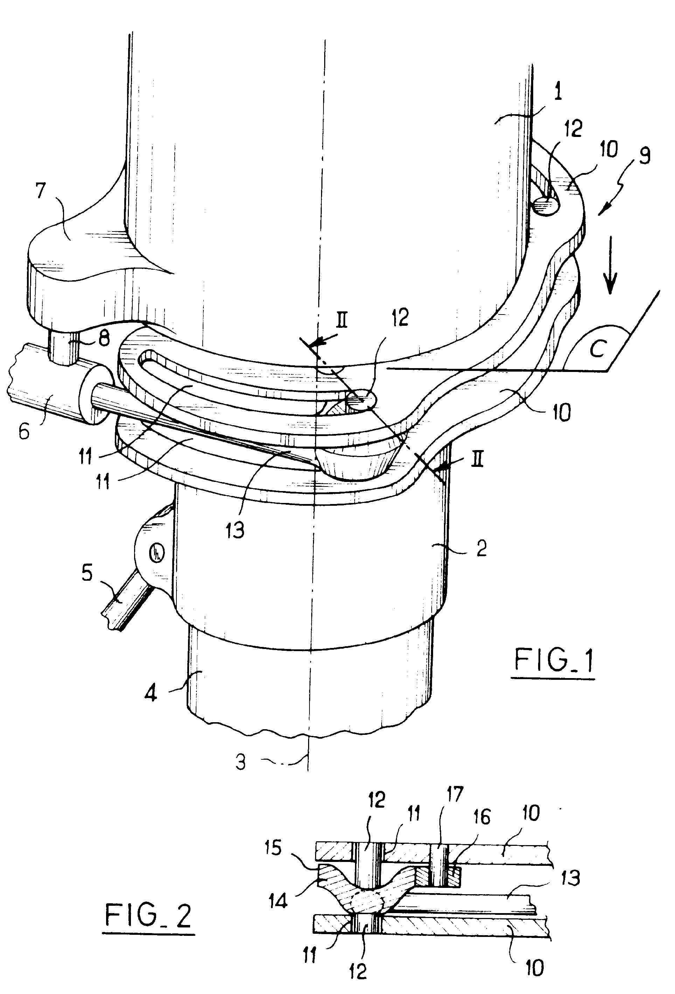

- la figure 1 est une vue en perspective de trois quarts avant du dispositif selon l'invention,
- la figure 2 est une vue en coupe partielle selon la ligne II-II de la figure 1,
- les figures 3 à 6 sont des vues de dessus,en coupe, selon le plan C de la figure 1, du dispositif selon l'invention dans différentes positions de fonctionnement.

En référence aux figures, l'atterrisseur selon l'invention comporte d'une façon classique un caisson 1 dans lequel un tube tournant 2 est monté pour tourner autour d'un axe de rotation 3. Une tige coulissante 4 est montée pour coulisser dans le tube tournant selon une direction axiale de celui-ci et est reliée au tube tournant par un compas 5 représenté de façon partielle seulement sur les figures.

Le dispositif d'orientation selon l'invention comporte deux vérins à simple effet 6 montés sur des chapes 7 du caisson 1 pour pivoter autour d'axes 8 parallèles à l'axe de rotation 3 du tube tournant.

Par ailleurs, un organe d'orientation généralement désigné en 9 est fixé au tube tournant 2 . Dans le mode de réalisation illustré, l'organe d'orientation 9 comprend deux plaques 10 fixées au tube tournant 2 perpendiculairement à son axe de rotation 3. Chacune des plaques 10 comporte deux lumières 11 en arc de cercle coaxiales au tube tournant 2. Des ergots d'actionnement 12 sont montés pour coulisser dans les lumières 11 et sont portés par l'extrémité de la tige 13 des vérins 6. Les ergots d'actionnement 12 s'étendent parallèlement à l'axe de rotation 3 du tube tournant 2. L'extrémité de la tige 13 des vérins 6 porte également une came 14 comportant une partie extrême circulaire 15 coaxiale aux ergots d'actionnement 12 et décalée de la tige de vérin 13 selon une direction parallèle aux ergots d'actionnement 12.

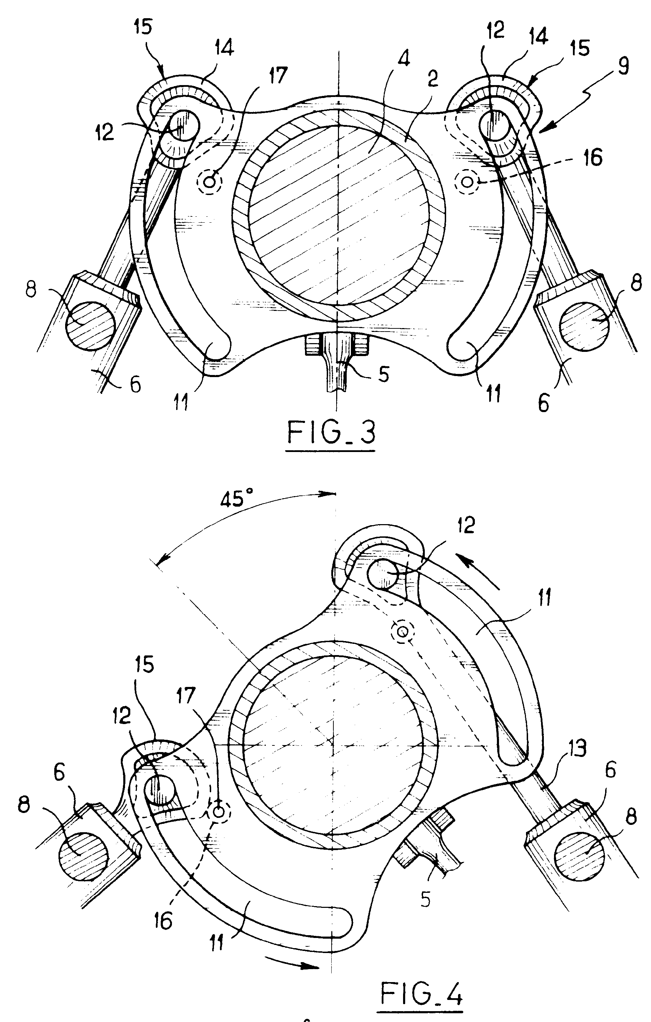

Au voisinage de l'extrémité avant des lumières 11, c'est-à-dire l'extrémité qui est tournée vers l'avant de l'atterrisseur lorsque celui-ci est dans une position neutre représentée sur la figure 3, la plaque 10 supérieure porte des galets suiveurs de came 16 qui s'étendent en regard de la came 14 et sont montés pour tourner sur un axe 17. L'axe 17 est à une distance de l'extrémité avant de la lumière 11 correspondante telle que la surface circulaire 15 de la came 14 vienne en appui sur la surface du galet 16 lorsque les ergots 12 sont en appui sur les extrémités des lumières 11 et que l'atterrisseur est pivoté à la limite ou au delà de la limite du secteur actif ainsi qu'il va maintenant être expliqué à propos du fonctionnement de l'atterrisseur selon l'invention.

La figure 3 illustre l'atterrisseur selon l'invention dans une position de roulage en ligne droite. Les deux vérins 6 sont alimentés en fluide de commande, par des moyens non représentés,de façon équilibrée et les ergots d'actionnement 12 sont en appui sur les extrémités avant des lumières 11 de l'organe d'orientation 9 . Lorsque l'on souhaite faire pivoter l'atterrisseur, l'un des vérins 6 reste alimenté tandis que l'autre vérin est mis à l'échappement jusqu'à ce que l'orientation souhaitée de la roue soit obtenue. Par exemple, dans le cas de la figure 4, le vérin de droite a été alimenté, tandis que le vérin de gauche a été mis à l'échappement.

L'atterrisseur peut ainsi être orienté sur un secteur actif dont les limites sont données par l'orientation prise lorsque l'un des vérins est dans une position totalement étendue, tandis que l'autre vérin est dans une position rétractée. On remarquera à ce propos que pour éviter un réglage très précis des limites de fin de course des tiges de vérin, on prévoira avantageusement une légère course de rétraction supplémentaire pour le vérin qui est en position rétractée lorsque l'autre vérin est en position totalement étendue .La figure 4 illustre un atterrisseur selon l'invention à la limite du secteur actif, c'est-à-dire que le vérin de droite est en position totalement étendue, alors que le vérin de gauche est en position rétractée. Dans le cas illustré, le secteur actif est un secteur angulaire de 45° de part et d'autre de la direction de ligne droite de l'atterrisseur. Lorsque l'atterrisseur atteint la limite du secteur actif, la partie circulaire de la came 15 vient en appui sur le galet suiveur de came 16 correspondant et l'extrémité de la tige du vérin 6 qui est rétracté, ici le vérin de gauche, est alors verrouillée en appui à l'extrémité de la lumière 11.

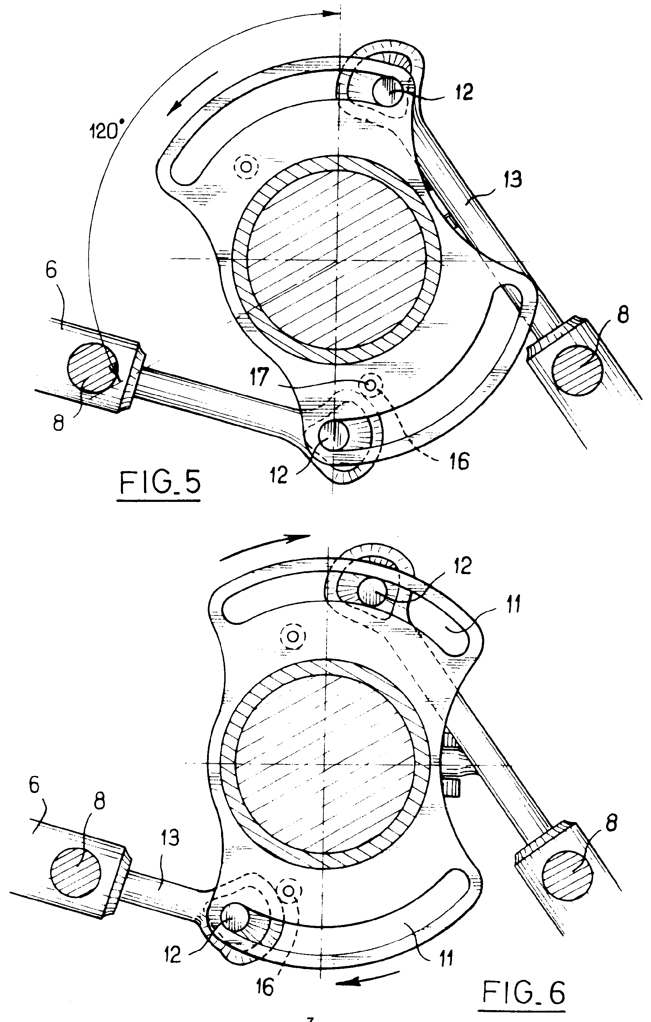

Au delà du secteur actif, l'atterrisseur ne peut pas être manoeuvré au moyen des vérins 6 mais il peut être manoeuvré manuellement, par exemple en agissant sur la barre de remorquage,de façon à faire pivoter l'atterrisseur de façon complémentaire. L'extrémité de la tige du vérin de gauche reste verrouillée à l'extrémité de la lumière 11 par roulement de la surface de came 15 sur le galet suiveur de came 16, tandis que l'extrémité de la tige du vérin de droite se déplace librement dans les lumières 11 correspondantes jusqu'au moment où les ergots d'actionnement 12 atteignent l'extrémité arrière des lumières 11. Pour des lumières couvrant un secteur angulaire de 75°, comme illustré sur les figures, on obtient ainsi un angle de rotation maximum de l'atterrisseur de 120° illustré sur la figure 5.

Lorsque l'atterrisseur est ramené de façon manuelle vers le secteur actif, comme illustré par la figure 6, les ergots d'actionnement 12 du vérin de droite se déplacent à nouveau dans les lumières 11 correspondantes tandis que la tige 13 du vérin de gauche se déplace, l'extrémité de cette tige étant verrouillée dans l'extrémité avant des lumières 11 correspondantes. Dès que l'orientation de l'atterrisseur atteint la limite du secteur actif, le vérin de gauche peut être alimenté et l'atterrisseur est à nouveau orienté de façon active. On remarquera à ce propos que la possibilité de faire pivoter l'atterrisseur de façon active dès que celui-ci atteint la limite du secteur actif est rendue possible par le verrouillage de l'extrémité du vérin à l'extrémité de la lumière 11 correspondante. Si ce verrouillage n'avait pas été prévu, les ergots 12 du vérin de gauche se seraient déplacés dans la lumière 11 correspondante lors du retour de l'atterrisseur vers la zone active et le vérin 6 se serait alors trouvé dans une position où il aurait été totalement inexploitable pour orienter l'atterrisseur.

Bien entendu l'invention n'est pas limitée au mode de réalisation décrit et l'on peut y apporter des variantes de réalisation sans sortir du cadre de l'invention. En particulier, on peut réaliser un organe d'orientation 10 comportant une seule plaque ajourée, un montage annexe étant alors de préférence prévu pour éviter que les ergots d'actionnement 12 ne puissent s'échapper des lumières 11.

De même, bien que l'invention ait été décrite, avec des cames décalées des tiges de vérin 13 selon une direction parallèle à l'axe de pivotement du manchon tournant 2, on peut prévoir des cames disposées dans le plan des tiges 13 mais décalées latéralement par rapport à celles-ci afin qu'il n'y ait pas d'interférence entre la tige et le galet suiveur de came 16 lors du pivotement de l'atterrisseur.

## Revendications

1. Dispositif d'orientation d'un atterrisseur comportant un caisson (1), un tube tournant (2) monté sur le caisson pour tourner autour d'un axe de rotation (3) de tube tournant, et une tige coulissante (4) montée pour coulisser dans le tube tournant (2) et reliée à celui-ci par un compas (5), le dispositif d'orientation comportant deux vérins (6) fixés au caisson (1) pour pivoter autour d'axes (8) parallèles à l'axe de rotation du tube tournant, caractérisé en ce que chaque vérin a une extrémité engagée de façon coulissante dans une lumière (11) d'un organe d'orientation (9) porté par le tube tournant, en ce que les vérins sont des vérins à simple effet agissant en poussée sur une extrémité des lumières (11) de l'organe d'orientation (9) pour faire pivoter l'atterrisseur dans un secteur actif délimité par des orientations de l'atterrisseur pour une position étendue d'un vérin et une position rétractée de l'autre vérin, et en ce que le dispositif comporte des moyens (15, 16) pour assurer un verrouillage à l'extrémité de la lumière (11) d'une extrémité du vérin en position rétractée lorsque l'atterrisseur passe par une limite du secteur actif, et maintenir le verrouillage tant que l'atterrisseur a une orientation correspondante à cette limite du secteur actif ou en dehors de celui-ci.

2. Dispositif d'orientation d'un atterrisseur selon la revendication 1 caractérisé en ce que des moyens pour assurer un verrouillage comprennent une came (15) montée à l'extrémité du vérin engagée dans la lumière (11) de l'organe d'orientation, et un galet suiveur de came (16) fixé à l'organe d'orientation (10).

## Patentansprüche

1. Fahrgestell-Lenkvorrichtung mit einem Gehäuse (1), mit einem Drehrohr (2), das um seine Rotationsachse (3) drehbar an dem Gehäuse befestigt ist, und mit einem Gleitkolben (4), der in dem Drehrohr (2) verschiebbar gelagert und durch eine Gelenkhebelstützgabel (5) mit diesem verbunden ist, wobei die Lenkvorrichtung zwei Areitszylinder (6) umfaßt, die um sich parallel zur Rotationsachse des Drehrohres erstreckende Achsen (8) schwenkbar an dem Gehäuse (1) befestigt sind, **dadurch gekennzeichnet,** daß ein Ende jedes Arbeitszylinders in einer Aussparung (11) eines durch das Drehrohr getragenen Lenkorgans (9) verschiebbar aufgenommen ist, daß die Arbeitszylinder einfach wirkende Zylinder sind, die ein Ende der Aussparungen (11) des Lenkorgans (9) mit Schubkraft beaufschlagen, um ein Schwenken des Fahrgestells in einem Aktionssektor zu bewirken, der begrenzt wird durch Orientierungen des Fahrgestells bei ausgefahrener Position des einen Arbeitszylinders und eingefahrener Position des anderen Arbeitszylinders, und daß die Vorrichtung Mittel (15,16) umfaßt, die sicherstellen, daß ein Ende des Arbeitszylinders in dessen eingefahrener Position an einem Ende der Aussparung (11) verriegelt wird, wenn das Fahrgestell eine Grenze des Aktionssektors überschreitet, und die diese Verriegelung aufrechterhalten, solange das Fahrgestell eine dieser Grenze des Aktionssektors entsprechende oder darüber hinausgehende Orientierung aufweist.

2. Fahrgestell-Lenkvorrichtung nach Anspruch 1, **dadurch ge****kennzeichnet,** daß die Mittel zur Sicherstellung einer Verriegelung einen Nocken (15), der an dem Ende des Zylinders angeordnet ist, das in die Aussparung (11) des Lenkorgans eingreift, und eine an dem Lenkorgan (10) befestigte Nockenfolgerrolle (16) umfaßt.

## Claims

1. An arrangement for steering an undercarriage comprising a casing (1), a rotary tube (2) mounted on the casing for rotating about an axis of rotation (3) of the rotary tube, and a sliding leg (4) which is mounted for sliding movement in the rotary tube (2) and which is connected to the latter by a strut assembly (5), the steering arrangement comprising two jacks (6) which are fixed to the casing (1) to pivot about axes (8) which are parallel to the axis of rotation of the rotary tube, characterised in that each jack has one end engaged slidably in a slot (11) of a steering member (9) carried by the rotary tube, that the jacks are single-acting jacks acting in a thrust mode on an end of the slots (11) of the steering member (9) to pivot the undercarriage in an active sector delimited by orientations of the undercarriage for an extended position of one jack and a retracted position of the other jack, and that the arrangement comprises means (15, 16) for effecting locking at the end of the slot (11) of one end of the jack in the retracted position when the undercarriage passes through a limit of the active sector and maintaining the locking action as long as the undercarriage is in an orientation corresponding to said limit of the active sector or outside same.

2. An arrangement for steering an undercarriage according to claim 1 characterised in that means for effecting a locking action comprise a cam (15) mounted at the end of the jack, which is engaged in the slot (11) of the steering member, and a cam-follower roller (16) fixed to the steering member (9).
